# EUROPEAN PATENT SPECIFICATION

(11) **EP 3 200 193 B1**
(45) Date of publication and mention of the grant of the patent: **02.07.2025**
(21) Application number: 17160036.4
(22) Date of filing: 07.01.2011
(51) Int. Cl.: G21F 1/00

(54) **RADIO-OPAQUE FILM FOR RADIATION PROTECTION**
STRAHLENUNDURCHLÄSSIGER FILM ZUM STRAHLENSCHUTZ
FILM OPAQUE AUX RAYONS X POUR LA PROTECTION CONTRE LE RAYONNEMENT

(30) Priority: 07.01.2010 US 683727; 04.10.2010 US 897611
(43) Date of publication of application: 02.08.2017
(62) Divisional of application: 11732251.1
(73) Proprietor: Bloxr Solutions, LLC, Branchburg, NJ 08876 (US)
(72) Inventor: KHANDKAR, Ashok C., Salt Lake City, UT Utah 84109 (US)
(74) Representative: De Vries & Metman

(56) References cited:
- WO-A1-2011/082347
- US-A1- 2002 148 980
- US-A1- 2004 262 546
- US-A1- 2006 151 750
- US-A1- 2008 182 093
- US-A1- 2009 272 921

## Description

### BACKGROUND

Technical Field: The present invention relates to radio-opaque films for attenuating radiation energy from fluorescent imaging systems that employ radiation energy, especially for the protection of medical staff and patients against the damaging effects of x-rays and other similar high energy radiation used in surgical and other medical procedures.

Related Art: Physicians and allied clinical personnel, collectively referred to as medical staff, are commonly involved in medical procedures involving patients in which fluoroscopic and other types of radiation systems (such as computer tomography, or CT, systems) are used for purposes of diagnostic detection or guidance procedures. These radiation systems allow the medical staff to peer into the body systems of a patient with minimal invasiveness. The images generated may be in the form of a single image, or a video feed, both of which may be live. For example, the anatomy of a patient may be illuminated using x-rays so that the medical staff can carry out the procedures using a fluoroscopic viewing screen. In one case, x-ray fluoroscopy may be used to indirectly guide placement of a surgical device within the patient during the surgical procedure.

However, one of the concerns arising from the increased use of fluoroscopic radiation systems in medical procedures is the amount of radiation exposure to both medical staff and patients. Epidemiological data suggest that exposure to as "little" as 5 to 10 rem over a lifetime increases the risk of developing cancer. Literature also suggests that there is no lower threshold on the amount of radiation that could be considered acceptable. Further, studies have shown that elevated radiation exposure levels can be expected when larger body parts of a patient are imaged, or when parts of the medical staffs body, such as extremities, are positioned closer to the x-ray source or in the direct x-ray field.

While the exposure levels capable of producing damage to tissue are being debated and continually revised as more information is established, the cumulative effects of consistent radiation exposure remain unknown. That is, while the selected dose of radiation used in anyone imaging sequence may normally be well below safe exposure limits, repeated exposure to medical staff and patients from one or more radiation sequences in procedures involving one or more patients may increase the risk of exposure for the medical staff and patients beyond what is normally considered safe operating procedures. This is possibly due to an increase in cumulative radiation dosage beyond what is normally considered safe. Recent investigations in medical diagnostics practices suggest that the dose and exposure should follow the "As Low As Reasonable" approach.

For instance, members of the surgical team may be exposed unnecessarily to x-rays when performing surgery on a patient involving the use of fluoroscopic imaging techniques. As an example, in diagnostic procedures using x-rays or computed tomography (CT) scans, a radiologist may have to hold a patient such as an infant, or an animal in the case of veterinary work, to restrain the movement of the patient in order to obtain satisfactory image resolution. **In** these cases, at a minimum, the hands of the radiologist or other medical staff may be exposed to harmful radiation, such as x-rays. Additionally, repeated exposure across multiple procedures on one or more patients may also increase the risk of radiation exposure to the medical staff.

The patient may also be exposed to increased risk as x-rays are used increasingly in more common doctor/patient settings. For example, mobile C-arm image intensifiers, as fluoroscopic imaging systems, are increasingly used in operating rooms, outpatient clinics, and emergency departments to image larger, denser body areas such as the pelvis or spine. The images are taken during elective and non-elective surgical procedures and may expose nontargeted bones and muscles to increased radiation, as well as other more radio-sensitive underlying visceral organs. Further, the same patient may be subject to multiple exposures over his or her life-time, thereby accumulating the dose and increasing the risks of harm to the patient.

As one solution, when possible lead aprons are used to protect both medical staff and patients from such radiation. These lead aprons are effective in blocking radiation incident to one side of the apron from going through the apron and exiting the other side, and as such protect whatever is underneath the apron from radiation. For instance, when imaging a targeted body part of a patient, one or more lead aprons may be arranged around the patient allowing exposure of the targeted body part, but at the same time minimizing radiation exposure of non-targeted body parts. Also, medical staff may wear lead aprons to protect themselves from radiation when the patient is Subjected to fluoroscopic imaging.

However, these lead aprons can be heavy. Because this heaviness restricts movement of arms and hands of the medical staff, lead aprons worn by the medical staff typically leave the arms and hands free in order to perform the surgical procedure. As such, these lead aprons offer limited protection to the medical staff since their hands are exposed to repeated exposure.

Moreover, gloves containing lead compounds or other metals do not provide a satisfactory solution for reducing exposure to the hands and are not typically worn by the medical staff. These gloves may be inflexible or at increased risk for tearing. As a result, the lack of protection for the arms and hands of medical staff in repeated procedures may result in a cumulative radiation exposure that is above acceptable levels.

For instance, these gloves are made of a flexible polymer containing lead or lead compounds. They also may contain a layer of lead or lead compounds made by dipping the inner surface of a flexible glove into a mixture containing lead. These leaded gloves are suitable for blocking radiation. An alternative to lead are other heavy metals or heavy metal compounds comprising cadmium, tungsten and the like. However, these lead compounds and other heavy metal compounds are known to be toxic to human tissue. As such, gloves containing these lead compounds and other heavy metal compounds could leave trace amounts on the patient's skin or on the skin of the physician, just from the ordinary use of the glove. Moreover, the addition of lead or other heavy metal compounds of sufficient concentrations into the glove to block radiation may compromise the tear resistance of the glove. When the glove tears, these lead compounds or other heavy metal compounds within the glove may be exposed to the patient. In both of these cases, the use of these gloves may potentially result in the undesired assimilation of lead or other heavy metal compounds into the bodies of patients and medical staff.

Further, gloves infused with sufficient concentrations of lead to block radiation may be inflexible or stiff. This inflexibility restricts the agile movement of the physician's hand that is necessary for delicate procedures. That is, these gloves cause the physician's fingers to lose their dexterity. Moreover, this inflexibility of the gloves reduces the tactile sensation of the hands and fingers of the person wearing the glove. Physicians rely on this tactile sensation as a secondary source of information while simultaneously viewing the fluoroscopic viewing screen. For instance, tactile sensation is used by the physician to help guide their hands and fingers when they may be inside the patient and hidden from direct view.

Thus, a need exists to exercise caution and limit exposure to radiation for both medical staff and patients. It is also desirable to protect medical staff members from radiation in a way that does not limit them from conducting their procedures.

US 2008/0182093 describes a multilayer X-ray and gamma radiation protection elastomeric material providing an intermediate layer trapped between two outer layers, wherein the intermediate layer is formed by an elastomeric matrix comprising a dispersion of droplets of a radiopaque substance.

US 2009/272921 describes a laminated X-ray or radiation protection material provided "with a secondary radiation layer with a low Z radiation protection material and a barrier layer with a high Z radiation protection material.

US 2002/148980 concerns a radiation attenuation system that includes a polymeric resin comprising a web wherein a radiation attenuation material is dispersed.

WO 2011/082347 describes a multilayered, flexible, radiation shielding material comprising two or more layers of a polymeric sheet or film, each layer having a radiation attenuating material dispersed throughout the polymeric sheet or film.

US 2006/151750 (D5) describes a laminated X-ray or radiation protection material having at least two layers with different shielding properties.

### DISCLOSURE

The present invention relates to a radio-opaque film as shield for radiation attenuation as set out in the appended set of claims.

The present invention includes various embodiments of radio-opaque films according to the appended claims. A radio-opaque film of the present invention includes at least one layer of radio-opaque material disposed between a pair of containment layers. The radio-opaque layer comprises particles of radio-opaque material and a binder, which holds the particles of radio-opaque material together. When held between two pliable containment layers, the radio-opaque layer may also be pliable.

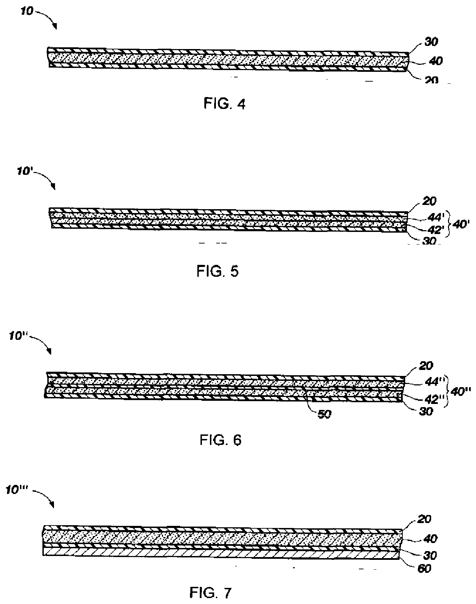

The radio-opaque material may comprise a non-toxic material. The radio-opaque material comprises a first sublayer (42' - Fig 5;) comprising a first radio-opaque material comprising barium sulfate; and a second sublayer (44' - Fig 5) comprising a second radio-opaque material comprising bismuth oxide, wherein the first sublayer is disposed adjacent the second sublayer and the radio-opaque material of the first sublayer differs from the radio-opaque material of the second sublayer, and wherein all the radio-opaque materials in the radio-opaque layer are inorganic salts or oxides of the radio-opaque materials in the radio-opaque layer are inorganic salts or oxides of elemental species having an atomic number of 50 (or 52 or 59) or greater. Examples of such elemental species include, but are not limited to, barium, bismuth, and lanthanum. In some embodiments, the radio-opaque material may comprise a salt *(e.g.,* barium sulfate, bismuth oxide, etc.).

The radio-opaque films of the present invention include two or more radio-opaque layers. In such embodiments, adjacent layers may include different radio-opaque materials. Layers with different radio-opaque material may be organized to optimize attenuation of ionizing radiation while minimizing the overall thickness of the radio-opaque film.

Methods for manufacturing radio-opaque films are also within the scope of the present invention. In such a method, a radio-opaque material may be deposited onto a surface of a first containment layer, a second containment layer may be disposed over the radio-opaque material, and the first and second containment layers may be secured to one another, capturing the radio-opaque material therebetween. A binder that holds particles of the radio-opaque material together may also adhere to the first and second containment layers and, thus secure the first and second containment layers to one another.

Garments and other apparatus that are made, at least in part, from a radio-opaque film that incorporates teachings of the present invention are also within the scope of the present invention.

Other aspects, as well as features and advantages of various aspects, of the present invention will become apparent to those of ordinary skill in the art through consideration of the ensuing description, the accompanying drawings, and the appended claims.

### BRIEF DESCRIPTION OF THE DRAWINGS

Exemplary embodiments are illustrated in referenced figures 3 and 5-17 of the drawings which illustrate what is regarded as the preferred embodiments presently contemplated. It is intended that the embodiments and figures disclosed herein are to be considered illustrative rather than limiting.
FIG. 1 is not according to the invention and present for illustration purposes only, showing a diagram illustrating a medium that is suitable for topical application on skin that includes an active ingredient capable of attenuating radiation.
FIG. 2A is not according to the invention and present for illustration purposes only, showing a graph illustrating the gray scale intensity versus thickness of various compounds, in accordance with one embodiment of the present invention.
FIG. 2B is not according to the invention and present for illustration purposes only, showing a graph illustrating the radiation attenuation abilities of various compounds.
FIG. 3 is a system capable of radiation attenuation, in accordance with one embodiment of the present invention.
FIG. 4 is not according to the invention and present for illustration purposes only, showing a cross-sectional representation of a radio-opaque film.
FIG. 5 is a cross-sectional representation of an embodiment of radio-opaque film that includes a plurality of directly adjacent radio-opaque layers between a pair of containment layers.
FIG. 6 is a cross-sectional representation of another embodiment of radio-opaque film, which includes a plurality of physically isolated radio-opaque layers between a pair of containment layers.
FIG. 7 is a cross-sectional representation illustrating a radio-opaque film with a substrate material secured to one of the containment layers.
FIG. 8 schematically depicts use of a radio-opaque film or an apparatus that includes a radio-opaque film.
FIGs. 9 and 10 are graphs that illustrate the attenuation provided by a plurality of radio-opaque film samples and a control swatch at a variety of different intensities of ionizing radiation.
FIGs. 11-13 show x-ray energy spectra at 60 kVp, 90 kVp and 120 kVp, respectively.
FIG. 14 is a graph depicting the degree to which an embodiment of radio-opaque film of the present invention attenuates ionizing radiation relative to various other radio-opaque materials.
FIG. 15 is a graph depicting an example of the weight savings that may be achieved by using a radio-opaque film of the present invention in a frontal radiation shield, relative to the weight of a commercially available lead-free frontal radiation shield.

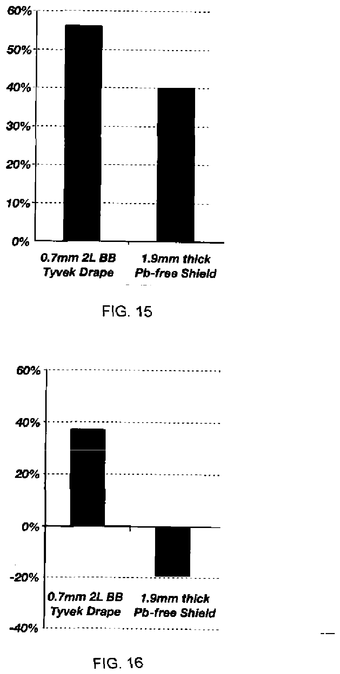

The graph of FIG. 16 depicts an example of the weight savings that may be achieved when a radio-opaque film of the present invention is used to manufacture a radiation-blocking garment, as compared with the expected weight of a garment manufactured from a commercially available lead-free material.

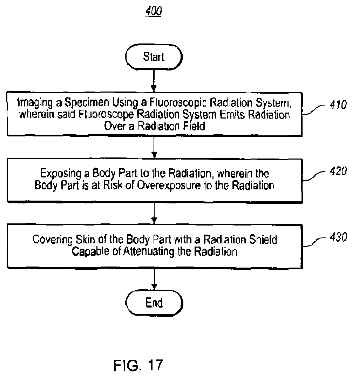

FIG. 17 is a flow diagram illustrating a method for shielding radiation, in accordance with one embodiment of the present invention.

### BEST MODE(S)

Reference will now be made in more detail to the preferred embodiments of the present invention, a medium for shielding patients and medical staff including surgeons, physicians, and clinicians from radiation, and a method for implementing the medium. While the invention will be described in conjunction with the preferred embodiments, it will be understood that they are not intended to limit the invention to these embodiments.

Accordingly, embodiments of the present invention provide for a radio-opaque film (10' - Fig. 5), comprising a radio-opaque layer (40' - Fig 5;) disposed between a first containment layer (20 - Fig. 5) and a second containment layer (30 - Fig. 5) according to claim 1.

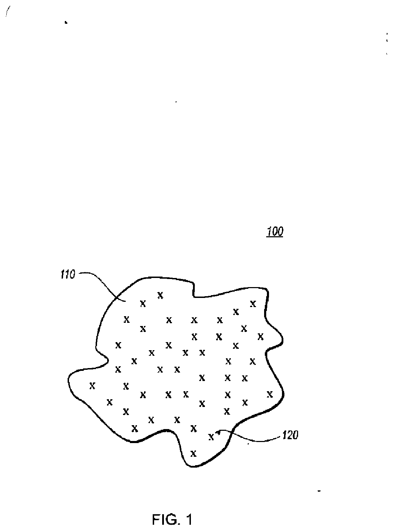

FIG. 1 is an illustration of a shield 100 for radiation attenuation that is not according to the invention and for illustration purposes only. FIG. 1 is a two-dimensional depiction of the shield 100. The shield 100 includes an organic or inorganic carrier 110 that is suitable for topical application on human tissue, such as skin. The shield 100 also includes an active ingredient 120 that is homogeneously dispersed throughout the organic carrier. More specifically, the active ingredient 120 includes an element having a high atomic number and that is suitable for attenuating radiation. The following embodiments of the shield 100 are not according to the invention and for illustration purposes only.

The organic or inorganic carrier 110 is of a form capable of aqueous dispersion and formulated for ready and effective application on human tissue, such as skin. For instance, the carrier is of a cream composition and exhibits thixotropic characteristics, in one embodiment. That is, the cream initially resists flow when a shear stress is applied, but with sufficient force flows to form a smooth, continuous film on the skin. In one embodiment, the cream composition includes a solid content on the order of 33-50 percent and a pH ranging from 5.0 to 6.5, and are characteristic of ingredients commonly used in creams used in skin care or hand lotions.

The cream composition is in the form of an alcohol based gel, in another embodiment. The gel can be formulated using a variety of cosmetically/dermatologically acceptable vehicles, diluents, or carriers. As a characteristic, these gel compositions liquefy or freely flow from a solid state when subjected to force or vibration. These alcohol based gel compositions can be fast drying and non-greasy, or could consist of oil-in-water emulsions. As examples, alcohol based compositions can include film-forming organic polymers, such as Dermacryl.R^{™}. LT, that impart waterproofing characteristics and decreased rub-off of the active ingredients present in the cream composition.

In still another embodiment, the organic or inorganic carrier 110 could be in a form that is capable of being sprayed. For instance, the organic carrier 110 is composed of any compound that exists in a fluid, liquid, or any appropriate state, and that is capable of being dispersed as a vapor or a fine particulate. The use of the spray implementation allows for quick application of the shield to larger areas requiring radiation protection.

As shown in FIG. 1, the shield 100 includes an active ingredient 120 that is suitable for attenuating radiation. The active ingredient is represented by the "x" symbols, and are homogeneously dispersed throughout the carrier 110. More particularly, the active ingredient 120 exhibits radiation attenuating capabilities. That is, the active ingredient 120 is capable of performing one or a combination of blocking, absorbing, scattering, or reflecting of x-ray radiation.

The active ingredient consists of any inorganic salt compound that is suitable for attenuating x-ray radiation, and that exhibits one or more of the following characteristics: non-toxic to human tissue, stable, non-flammable, free flowing, having particles with high surface area, and is capable of being well dispersed uniformly. In particular, the active ingredient 120 is comprised of an inorganic salt compound with at least one element of high atomic number. That is, the inorganic salt compound includes cations with atomic numbers high enough to effectively block x-ray radiation. More specifically, the active ingredient is composed of any element, compound, or combination of compounds which contains a cation of high atomic number, such that it is capable of effectively attenuating x-ray radiation emanating from fluoroscopic imaging systems and other medical diagnostics and treatment systems.

In one embodiment, the active ingredient includes an element taken from the group consisting of bismuth, barium, and lanthanum. For instance, the element forms the cation in the organic salt compound.

In one embodiment, the active ingredient is a barium salt. For instance, the barium salt compound is barium sulfate (e.g., Ba₂SO₄). Barium sulfate has been proven to be safe and non-toxic to humans. In another embodiment, the active ingredient is a lanthanum salt. For instance, the lanthanum salt compound is lanthanum oxide (e.g., La₂O₃). In still another embodiment, the active ingredient is a bismuth salt. For instance, the bismuth salt compound is bismuth oxide (e.g., Bi₂O₃). In still another embodiment, the active ingredient is a combination of barium sulfate, bismuth oxide, and lanthanum oxide of varying ratios from 0 to 100. That is, each of the compounds may be varied from 0 to 100 in a composition making up the active ingredient.

In still other embodiments, the active ingredient composed of organic agents are contemplated. The organic agents are also suitable for attenuating radiation.

In one embodiment, the active ingredient comprises at least 25 percent by weight of the composition forming the shield 100, which includes the carrier 110 and the active ingredient 120. In other more specific embodiments, the active ingredient ranges between 33-50 percent by weight of the composition forming the shield 100. In another embodiment, the active ingredient ranges between 1-20 parts by weight of a composition forming the shield 100, which includes a composition comprising the carrier and the active ingredient, wherein the carrier approximates 1 part by weight of the composition. In other embodiments, the active ingredient comprises at least 10 percent by volume of a composition comprising the carrier and the active ingredient. In another embodiment, the active ingredient comprises 10-67 percent by volume of the composition. In still another embodiment, the carrier ranges between 0.1 to 99.9 percent by weight of the composition comprising the carrier 110 and the active ingredient 120, and where the active ingredient comprises the remaining portion by weight of the composition. In each of these embodiments, the active ingredient has a radiation attenuating capacity that sufficiently protects against radiation exposure. The level of protection is achieved while preserving dexterity of the hands and fingers and maintaining tactile sensation of the hands and fingers. As such, the level of protection is achieved without comprising the execution of clinical techniques and without deleteriously influencing the outcome of such clinical techniques.

In combination, the shield 100 composition, comprising cream based compositions and an active ingredient, is formulated to provide radiation protection. The cream based composition of the shield 100 comprises a cosmetically acceptable vehicle, carrier, or diluent and exhibits characteristics including an aqueous, dispersed phase, and an oily, dispersed phase. The active ingredient consists of one or more non-toxic United States Food & Drug Administration (FDA) approved radiation attenuating compounds, of various concentrations, and is capable of providing protection from harmful x-ray radiation.

The shield 100 consists of cream based compositions blended with an active ingredient that may be in powder form. For instance, the active ingredient includes an inorganic radiation absorbing salt in powder form, such as barium sulfate, lanthanum oxide, bismuth oxide, or a combination therein. To form the shield 100, the active ingredient is blended homogeneously with a base containing the carriers to form a topically applied radiation protection cream composition that provides substantial attenuation of radiation.

The compound or compounds forming the active ingredient are selected as a function of the desired radiation protection factor. The radiation protection factor may be expressed mathematically by the degree of attenuation of x-ray radiation in comparison to a known standard, such as those existing for metal foils (e.g., aluminum). As such, the compound or compounds forming the active ingredient may consist of varying concentrations in order to increase or decrease the effectiveness of radiation attenuation. For instance, the percent by weight of the active ingredient may be increased or decreased to obtain the proper radiation protection factor.

In addition to or separate from the above variation in concentration, compounds may be selected based on their ability in combination to increase or decrease the effectiveness of radiation attenuation. For instance, the active ingredient may include a barium salt compound and a bismuth salt compound. In general, the bismuth salt compound, partly due to its higher atomic number, exhibits higher radiation attenuating capacity than a barium salt compound. As such, concentrations of the bismuth salt compound may be varied in relation to the barium salt compound to achieve the proper radiation protection factor.

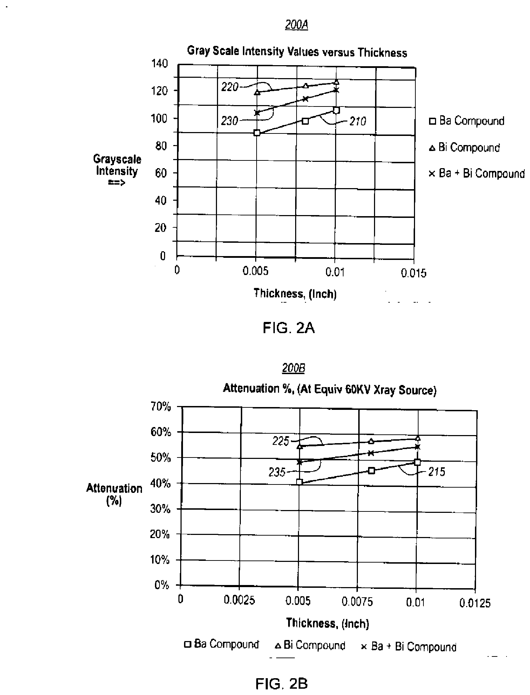

FIGS. 2A and 2B are graphs illustrating experimental results for various shield compositions that are not part of the invention, and for illustration purposes only. For instance, these various shield compositions include active ingredients of barium sulfate, bismuth oxide, and a homogenous mixture of barium sulfate and bismuth oxide. Where it is a mixture, the active ingredient is formulated in a 50:50 atomic number proportion of barium to bismuth.

Each of the various active ingredients is ground into a fine homogenous powder form and blended with a carrier common to each of the shield compositions. As an example and for purposes of experimentation, the carrier formulation includes glycerin, stearic acid, glycol stearate, glycerin stearate, and carbomer in an aqueous mixture. The fine powders of active ingredients were mixed with the carrier in a weight ratio ranging from 5.5 to 8 parts by weight of the powder to 1 part by weight of the carrier composition. The powders were blended homogeneously to obtain a smooth, homogeneous creamy texture typically used for topical applications such as cosmetic skin moisturizing creams or creams used for protection from solar ultra-violet radiation such as sun-block creams.

As such, three different shield cream based compositions as described above were formulated and tested, as indicated above. Each of the prepared creams were applied onto a polymer test film with the creams having three controlled thicknesses: 0.13 mm (0.005 inch), 0.20 mm (0.008 inch), and 0.25 mm (0.010 inch). The test films were then placed in a Faxitron x-ray cabinet, and exposed to an x-ray source excited at 18 kV for 120 seconds. As a control, an aluminum step wedge with steps of 0.076 mm (0.003 inch), 0.15 mm (0.006 inch), and 0.23 mm (0.009 inch) was also simultaneously exposed to the x-ray source and used to calibrate the x-ray absorption of the test films.

Upon exposure to the radiation from the x-ray source, the test films were developed, and the resulting images indicated various degrees of radiation attenuation from the creams of controlled composition and thicknesses. The images from the test films were analyzed and compared to the images provided from the aluminum step wedge. More specifically, when examining the test films, areas of the images showing higher levels of x-ray attenuation appear in lighter gray contrast. Conversely, areas of the images showing lower levels of x-ray attenuation appear as darker gray contrast. In summary, the higher the attenuation of radiation due to the applied creams thickness and composition, the lighter the gray contrast appears on the corresponding image.

FIG. 2A is a graph illustrating the gray scale intensity versus thickness of the three shield cream based compositions tested. In particular, the line 210 corresponds to a cream based composition including barium sulfate (Ba₂SO₄) of varying thicknesses. Also, line 220 corresponds to a cream based composition including bismuth oxide (Bi₂O₃) of varying thicknesses. Further, line 230 corresponds to a cream based composition including a homogenous mixture of barium sulfate.

For each of the cream based compositions, gray scale intensity was quantified and calibrated against the gray scale intensity values from the aluminum step wedge control. As shown in FIG. 2A, the composition including barium sulfate (Ba₂SO₄) corresponding to line 210 provided the lowest gray scale intensity values for each of the thicknesses tested. In other words, these values corresponded to the darkest gray scale contrast. The composition including a homogenous mixture of barium sulfate (Ba₂SO₄) and bismuth oxide (Bi₂O₃) corresponding to line 230 provided more gray scale intensity values, when compared to the composition including barium sulfate (Ba₂SO₄). These values corresponding to line 230 were due to a lighter gray scale contrast compared to those corresponding to line 210. And the composition including bismuth oxide (Bi₂O₃) corresponding to line 220 provided the highest gray scale intensity values of the three compositions tested, corresponding to the highest gray scale contrast.

FIG. 2B is a graph illustrating the radiation attenuation abilities of the various cream based compositions that were tested, and are based on the gray scale intensity values from FIG. 2A. In particular, the gray scale values from FIG. 2A were translated into an equivalent radiation attenuation percentage and adjusted to reflect values based on a 60 kV x-ray source that is typically used in clinical settings. In particular, the line 215 corresponds to the radiation attenuation readings for the cream based composition including barium sulfate (Ba₂SO₄) of varying thicknesses. Also, line 225 corresponds to the radiation attenuation readings for the cream based composition including bismuth oxide (Bi₂O₃) of varying thicknesses. Further, line 235 corresponds to radiation attenuation readings a cream based composition including a homogenous mixture of barium sulfate (Ba₂SO₄) and bismuth oxide (Bi₂O₃).

As expected, the values shown in FIG. 2B reflect the performance of each of the compositions in terms of gray scale intensity from FIG. 2A. That is, as shown in FIG. 2B, the composition including bismuth oxide (Bi₂O₃) corresponding to line 225, provided the highest attenuation of radiation for each of the thicknesses tested. The composition including the homogenous mixture of barium sulfate (Ba₂SO₄) and bismuth oxide (Bi₂O₃) corresponding to line 235 provided lesser radiation attenuation, when compared to the composition including bismuth oxide (Bi₂O₃). And the composition including barium sulfate (Ba₂SO₄) corresponding to line 215 provided the least attenuation of radiation of the three compositions tested.

More particularly, as shown in FIG. 2B, each of the cream based compositions were successful in attenuating a significant amount of x-ray radiation. For instance, the composition including barium sulfate (Ba₂SO₄) corresponding to line 215 provided attenuation values as a percentage between 40 and 50 percent. The composition including the homogenous mixture of barium sulfate (Ba₂SO₄) and bismuth oxide (Bi₂O₃) corresponding to line 235 provided attenuation values as a percentage between 50 and 60 percent. And the composition including bismuth oxide (Bi₂O₃) corresponding to line 225 provided the attenuation values as a percentage between 55 and 60 percent.

In an embodiment as set out in the appended set of claims, the active ingredient capable of blocking radiation is infused directly into a fabric layer comprising a drape, or is infused into a layer that is adjacent to a substrate layer comprising the drape. More specifically, the inorganic radiation protective salt compounds can be impregnated into or onto natural or synthetic, woven or nonwoven fiber based disposable paper or cloth products, in accordance with one embodiment of the present invention. It is contemplated that the radiation protecting drapes are hermetically sealed for sterility and ease of use during medical procedures.

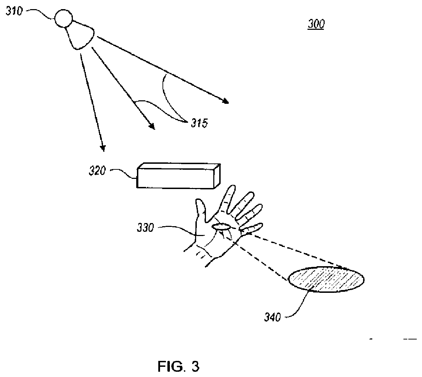

FIG. 3 illustrates a system 300 capable of radiation attenuation. The system is capable of being implemented in any medical setting implementing fluoroscopic imaging or other medical diagnostic or treatment systems that employ radiation for use in diagnostic detection, treatment, or guiding purposes when performing medical procedures. In particular, system 300 is capable of providing radiation protection to arms and hands of medical staff.

System 300 includes a radiation source 310 emitting radiation over a radiation field 315. A targeted specimen 320, such as the targeted body part of a patient, is located within the radiation field 315. For instance, the specimen may be located on a raised platform or table for available access. For purposes of illustration, specimen 320 is illustrated as a three-dimensional box, and represents any type of specimen, such as an arm, abdomen, leg, or any other body part of a human or non-human patient.

For example, the radiation source is a fluoroscopic radiation system used for imaging a targeted specimen 320, such as the targeted body part of a patient. As a practical example, mobile C-arm fluoroscopic imaging systems are commonly used in in-patient and out-patient settings. As such, this C-arm imaging system includes the radiation source 310 and is used for imaging the specimen when performing medical procedures.

As shown in FIG. 3, the radiation field 315 completely surrounds the specimen and even spreads into areas beyond where the specimen is located. A non-targeted body part many times is located within the radiation field 315, where the body part is not targeted for imaging, but is exposed to radiation. For instance, hand 330 is a body part that is located within the radiation field 315 and is exposed to x-ray radiation from the radiation source 310. In some instances, the hand as the non-targeted body part is associated with the specimen. For instance, the hand 330 may be part of the patient. In other instance, the hand as the non-targeted body part may be part of a member of the medical staff, where the hand is used to stabilize the specimen or to hold surgical instruments engaged with the patient when performing medical procedures. Without proper protection, the hand 330 is at risk for overexposure to the radiation from the radiation source 310 while the specimen is being imaged.

In an embodiment that is not part of the invention system 300 includes a radiation shield 340 that is topically applied to human tissue of the body part, and may be advantageously placed between the radiation source 310 and the body part 320. As shown in FIG. 3, the radiation shield 340 is topically applied to the skin of the hand 330. This shield may be applied to a portion of the hand 330 or the entire hand 330 as required. More particularly, the radiation shield 340 is suitable for attenuating radiation from the radiation source 310.

The radiation shield 340 comprises a carrier (e.g., organic or inorganic) having thixotropic properties. For instance, the carrier is a cream based organic composition that is formulated for ready and effective application on the skin. The radiation shield 340 also includes an active ingredient that is homogeneously dispersed throughout the carrier. More particularly, the active ingredient comprises an inorganic salt compound having an element having a high atomic number, and is suitable for attenuating radiation. For instance, the inorganic salt compound is taken from one of the following: barium sulfate, bismuth oxide, lanthanum oxide, or a combination therein.

In another embodiment, the fluoroscopic radiation system outputs essentially monochromatic radiation. That is, the radiation in the radiation field 315 is essentially of a single frequency. As such, the active ingredient in the radiation shield 340 is specifically configured to attenuate the monochromatic radiation emanating from the radiation source 310.

In another embodiment, a system including a radiation source, targeted specimen, and a non-targeted body part, is previously described in FIG. 3. In addition, the system includes a radiation shield that is topically applied to human tissue of the non-targeted body-part. The radiation shield is suitable for attenuating radiation from the radiation source. More specifically, the radiation shield includes a carrier (e.g., organic based or inorganic based carriers), and an active ingredient that is homogeneously dispersed throughout the carrier. The active ingredient comprises an inorganic salt compound with at least one element having a high atomic number and is suitable for attenuating radiation. Also, a composition comprising the carrier and the active ingredient is in a form capable of being sprayed.

Alternatively, or in addition, the system 300 may include a radio-opaque film as defined in the appended set of claims, such as a drape, for radiation attenuation. The radio-opaque film is suitable for covering other body parts at risk for overexposure to radiation from the radiation source. The radio-opaque film can cover the patient, or may be used by medical staff. The radio-opaque film comprises a flexible substrate, such as that made from a flexible fabric. The radio-opaque film also includes a layer adjacent the flexible substrate, wherein the layer comprises a composition homogeneously dispersed throughout the layer, and is similar to or includes the active ingredient previously described for use in the radiation shield 340.

According to the invention, a system including a radiation source, targeted specimen, and a non-targeted body part, as previously described in FIG. 3 includes a radio-opaque film for radiation attenuation. The radio-opaque film is suitable for covering the body part. The radio-opaque film comprises a flexible substrate. In addition, the radio-opaque film includes a layer adjacent the flexible substrate, wherein the layer includes a composition homogeneously dispersed throughout the layer that includes the active ingredient previously described for use in the radiation shield 340. Alternatively, the radio-opaque film includes the active ingredient homogenously dispersed throughout the flexible substrate, such that the active ingredient is incorporated within the flexible substrate.

A radio-opaque film according to the appended claims that incorporates teachings of the present invention may be used in a number of different ways. Without limiting the scope of the present invention, a radio-opaque film of the present invention may be used as a surgical drape, in shields and protective devices that provide an individual with protection from ionizing radiation, in garments that are worn by a healthcare provider (*e.g.,* a doctor, a physician's assistant, a nurse, a technician, etc.) during a procedure (*e.g.,* a surgical procedure, etc.) in which the healthcare provider may be exposed to ionizing radiation, and in radiation shielding curtains. Various embodiments of radio-opaque films that incorporate teachings of the present invention are shown in FIGs. 5 through 9.

In FIG. 4, a radio-opaque film 10 is depicted that includes a radio-opaque layer 40 sandwiched between a pair of containment layers 20 and 30, and that is not according to the invention and present for illustration purposes only. Each containment layer 20, 30 may comprise a thin, flexible film. The material of each containment layer 20, 30 may conform somewhat to the shape of an object, such as the body part of a patient, over which a radio-opaque film 10 that includes the containment layers 20 and 30 is positioned. The containment layers 20 and 30 may be configured in such a way as to enable folding of the radio-opaque film of which they are a part.

One or both containment layers 20 and 30 may include at least one surface with features, such as patterned or random texturing, that increase its effective surface area and/or enhance adhesion between that containment layer 20, 30 and the adjacent radio-opaque layer 40.

By way of example, and not by way of limitation, each containment layer 20 and 30 may have a thickness of about 15 mils (0.015 inch, or about 0.375 mm) or less. Of course, embodiments of radio-opaque films 10 that include containment layers 20, 30 of other thicknesses are also within the scope of the present invention.

A variety of different materials are suitable for use as containment layers, including, without limitation, polymers, papers, and fabrics. The material used as each containment layer 20, 30 may be selected on the basis of a number of factors, including, without limitation, the porosity of the material, water-resistance (which may be a function of porosity, the material itself, etc.), bacterial resistance (which may be a function of porosity, incorporation of antibacterial agents into the material, etc.), flexibility, feel, and any other factors. In some embodiments, each containment layer 20, 30 may comprise a polymer or a polymer-based material. More specifically, one or both containment layers 20, 30 may comprise a polymer film or a sheet of woven or nonwoven polymer fibers with paper-like or fabric-like characteristics. In other embodiments, one or both containment layers 20, 30 may comprise a polymer, but have a structure (*e.g.,* fibers arranged in a way) that resembles paper (*e.g.,* for use as a surgical drape, etc.) or fabric (*e.g.,* for use in a gown, etc.).

In some embodiments, one or both of the containment layers may have some opacity to ionizing radiation, or radio-opacity.

The radio-opaque layer 40 of a radio-opaque film 10 of the present invention includes a material that attenuates ionizing radiation, or a radio-opaque material. In some embodiments, the radio-opaque material of the radio-opaque layer 40 may be in a particulate or powdered form. In such embodiments, the radio-opaque layer 40 may include a binder that holds particles of the radio-opaque material together.

The radio-opaque material may be non-toxic. In various embodiments, the radio-opaque material may comprise or be based upon elemental species having atomic numbers of 56 or greater. Non-limiting examples of such elemental species include barium species, bismuth species and lanthanum species. In some embodiments, the radio-opaque material may comprise an inorganic salt. Non-limiting examples of non-toxic, radio-opaque inorganic salts include barium sulfate and bismuth oxide.

In embodiments where the radio-opaque layer 40 includes a binder, any material that will hold particles of the radio-opaque material together without causing a substantial decrease in the density of the radio-opaque material may be used as the binder. The binder may hold particles of radio-opaque material together loosely, it may provide a stronger bond between adjacent particles, and/or it may enable the formation of a smooth uniform coating, or film. Examples of such materials include, but are not limited to, polyvinyl alcohol (PVA), polyvinyl butyrol (PVB), polyethylene glycol (PEG), glycerine, capric triglyceride, cetyl alcohol, glyceryl sterate and combinations of any of these materials.

In a radio-opaque layer 40 with particles of radio-opaque material held together with a binder, the radio-opaque material may, in some embodiments, comprise at least about 50% of the weight of the radio-opaque layer 40, with the binder comprising about 50% or less of the weight of the radio-opaque layer 40. Other embodiments of radio-opaque layers 40 include about 75% or more of the radio-opaque material, by weight, and about 25% or less of the binder, by weight. In still other embodiments, the radio-opaque material may comprise about 97% or more of the weight of the radio-opaque layer 40, while the binder comprises only up to about 3% of the weight of the radio-opaque layer 40.

In some embodiments, a radio-opaque layer 40 of a radio-opaque film 10 of the present invention has a thickness of about 40 mils (0.040 inch, or 1 mm) or less. In other embodiments, a radio-opaque film 10 may include a radio-opaque layer 40 with a thickness of about 25 mils (0.020 inch, or about 0.6 mm) or less. In still other embodiments, the radio-opaque layer 40 of a radio-opaque film 10 may have a thickness of about 15 mils (0.015 inch, or about 0.375 mm) or less, about 10 mils (0.010 inch, or about 0.25 mm) or less, or about 5 mils (0.005 inch, or about 0.125 mm) or less.

The ability of the radio-opaque layer 40 to attenuate ionizing radiation depends upon a number of factors, including, without limitation, the attenuating ability of each radio-opaque material from which the radio-opaque layer 40 is formed, the relative amounts of radio-opaque material and binder in the radio-opaque layer 40, and the thickness of the radio-opaque layer 40.

The containment layers 20 and 30 may be secured to the radio-opaque layer 40, and to one another, in a number of different ways. As an example, in embodiments where the radio-opaque layer 40 includes a particulate or powdered radio-opaque material and a binder, the binder may adhere or otherwise secure the containment layers 20 and 30 to the radio-opaque layer 40 and, thus, to one another. In other embodiments, the containment layers 20 and 30 may be directly or indirectly secured to one another at a plurality of spaced apart locations (*e.g.*, in a matrix of spaced apart points, a grid of spaced apart row lines and column lines, etc.) with the radio-opaque layer 40 occupying substantially all other areas (*i.e.,* substantially all of the area) between the containment layers 20 and 30. For example, the containment layers 20 and 30 may be directly fused to one another (*e.g.*, by thermal bonding, solvent bonding, etc.). As another example, adhesive material may be disposed between a plurality of spaced apart locations on the containment layers 20 and 30.

Known processes may be used to manufacture a radio-opaque film 10 that embodies teachings of the present invention. In some embodiments, the radio-opaque material and binder may substantially homogeneously mixed in a solvent. The solvent may comprise a carrier solvent within which the binder is provided, or a separately added solvent. In more specific embodiments, the resulting slurry may have a solids content, or solids loading, of about 75% w/w to about 80% w/w. The slurry may then be applied to one of the containment layers 20 in a manner that will result in the formation of a thin film of radio-opaque material over the containment layer 20. In specific embodiments, a doctor blade or simulated doctor blade technique may be employed to form the radio-opaque layer 40. In other embodiments one or more rollers may be employed to form and disperse the radio-opaque layer 40 between the containment layers 20 and 30. The other containment layer 30 may then be applied over the radio-opaque layer 40. In a specific embodiment suitable for mass production, roll calendaring techniques may be used.

Turning now to FIG. 5, theradio-opaque film 10' of the present invention is shown. Like the radio-opaque film 10 depicted by FIG. 4, radio-opaque film 10' includes a pair of oppositely facing containment layers 20 and 30 with a radio-opaque layer 40' between the containment layers 20 and 30. Radio-opaque layer 40' differs from radio-opaque layer 40, however, in that radio-opaque layer 40' includes two (as depicted) or more sublayers 42', 44', etc as defined in appended claim 1. Each sublayer 42', 44', etc., includes a different radio-opaque material or mixture of radio-opaque materials than each adjacent sublayer 44', 42', etc. Each sublayer (*e.g.,* sublayer 42') is based upon an elemental species (*e.g.,* barium, bismuth, lanthanum, etc.) with an atomic number that is less than the atomic number of the elemental species of the radio-opaque material upon which the next successive sublayer (*e.g.,* sublayer 44') is based. Sublayer 42' comprises a first radio-opaque material comprising barium sulfate (barium, or Ba, has an atomic number of 56), while sublayer 44' comprises a second radio-opaque material comprising bismuth oxide (bismuth, or Bi, has an atomic number of 83). Of course, other arrangements of sublayers 42', 44', etc., are also within the scope of the present invention.

The use of multiple sublayers 42', 44', etc., may provide a radio-opaque layer 40' an increased attenuation over the use of a single layer of radio-opaque material of the same thickness as radio-opaque layer 40'. When superimposed sublayers 42', 44', etc., of different radio-opaque materials are used, selection of the radio-opaque material for each sublayer 42', 44' may be based upon the arrangements of their attenuating species (*e.g.,* lattice structures, the distances their attenuating species are spaced apart from one another, etc.), as sublayers 42' and 44' with differently arranged attenuating species may attenuate ionizing radiation differently. The material or materials of each sublayer 42', 44' may be selected on the basis of their ability to attenuate ionizing radiation over different bandwidths (or ranges) of frequencies or wavelengths, which may impart the radio-opaque layer 40' with the ability to attenuate a broader bandwidth of frequencies of ionizing radiation than the use of a single layer of radio-opaque material that has the same thickness as radio-opaque layer 40'.

Suitable processes, such as those described in reference to the radio-opaque film 10 shown in FIG. 4, may be used to manufacture a radio-opaque film 10' with two or more adjacent sublayers 42', 44', etc. Of course, the use of a plurality of sublayers 42', 44', etc., to form the radio-opaque film 40' requires slight modification of the above-described process, as only the first sublayer 42' is formed directly on the containment layer 20; each successively formed sublayer 44', etc., is formed on a previously formed sublayer 42', etc. Once all of the sublayers 42', 44', etc., are formed, the other containment layer 30 may then be positioned over and applied to the uppermost sublayer 44', etc.

FIG. 6 illustrates another embodiment of radio-opaque film 10", in which adjacent sublayers 42', 44', etc., of the radio-opaque layer 40' are physically separated from one another by way of an isolation layer 50. Isolation layer 50 may comprise a polymer, such as a low density polyethylene, or any other suitable material. Isolation layer 50 may itself have radio-opaque properties, or it may be substantially transparent to ionizing radiation.

Radio-opaque film 10" may be manufactured by processes similar to those used to form radio-opaque film 10, with each isolation layer 50 being positioned over and secured to a sublayer 42', etc. (*e.g.,* by roll calendaring, etc.), then forming each successive sublayer 44', etc., on an isolation layer 50. After defining the uppermost (or outermost) sublayer 44', etc., a containment layer 30 is positioned over and secured to that sublayer 44', etc.

In FIG. 7, an embodiment of radio-opaque film 10"' that includes an additional substrate 60 secured to one of the containment layers 30 is illustrated. The substrate 60 may comprise any suitable material that may impart the radio-opaque film 10"' with desirable properties.

For example, in embodiments where the substrate 60 is formed from a paper or a paper-like material (*e.g.,* polyethylene fibers, etc.), it may be readily positioned and repositioned without sticking to a surface (*e.g.,* skin, etc.) over which it is used. A substrate 60 formed from such a material may also impart the radio-opaque film 10‴ with the ability to absorb liquids. Such an embodiment of radio-opaque film 10‴ may be useful as a surgical drape or a similar article to be used in a patient examination room.

In other embodiments, the substrate 60 may be formed from cloth or a cloth-like material (*e.g.,* polyethylene fibers, etc.), which may impart the radio-opaque film 10"' with a cloth-like appearance, which may be desirable in situations where the radio-opaque film 10"' is used to form a protective garment, a protective shield (*e.g.,* sheet, etc.), or the like.

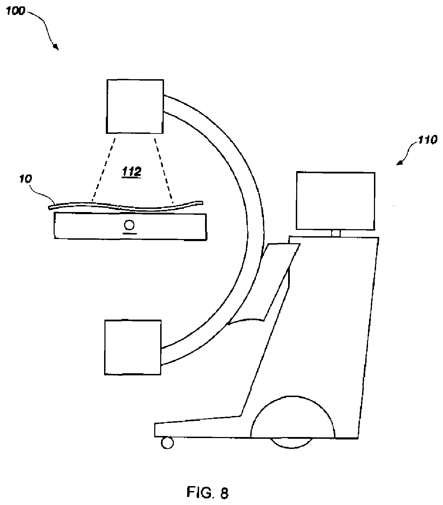

As indicated, a radio-opaque film (e.g,. radio-opaque film10', 10", 10"' or any other embodiment of radio-opaque film) of the present invention may be used to protect a patient, a healthcare provider or both from ionizing radiation. FIG. 8 illustrates an embodiment of the manner in which a radio-opaque film 10' of the present invention, or another article (*e.g.,* a surgical drape, etc.) that includes a radio-opaque film 10', is used to reduce or eliminate exposure of a patient and/or a healthcare professional to ionizing radiation.

In FIG. 8, an imaging device 110 (*e.g.,* an X-ray machine, a CAT scan (computer aided tomography) machine, a fluoroscope, etc.) is used from a location outside a subject's body O to image an internal portion of the subject's body O. Areas of the subject's body O that are within a radiation field 112 of the imaging device 110 may be covered with a radio-opaque film according to claim 1 (10). Additionally, parts of the body of each healthcare professional that may be located within or near the radiation field 112 may be covered with a radio-opaque film 10' according to the claims. Further, parts of the subject's body O that are located inside and or outside of the radiation field 112, as well as parts of the bodies of healthcare professionals that are located inside and or outside of the radiation field 112, but in the same room as the subject, may be shielded from indirect or incidental ionizing radiation by covering those body parts with a radio-opaque film 10'according to the claims.

The EXAMPLEs that follow are not part of the invention and for illustrative purposes only, demonstrating the ability of a radio-opaque film 10 that embodies teachings of the present invention to attenuate ionizing radiation.

### EXAMPLE 1

Several samples of a radio-opaque film were formed by depositing bismuth oxide onto films of polyethylene terephthalate (PET), such as that marketed under the trade name MYLAR^{®} by E.I. du Pont Nemours & Co. of Wilmington, Delaware. The PET films were cut to lateral dimensions of 5 cm x 5 cm. The bismuth oxide was blended with a PVB binder, with the resulting mixture including 80% bismuth oxide, with the balance comprising PEG binder, glycerine, capric triglyceride, cetyl alcohol and glyceryl sterate. That mixture was then suspended in water to form a slurry with a solids content of about 80% w/w.

Two sets of samples were formed using the PET films and the bismuth oxide slurry. In a first set of the samples, the bismuth oxide slurry was applied to the precut PET films at a controlled thickness of 0.010 inch (0.25mm), then placing another precut PET film over the bismuth oxide slurry and allowing the water to evaporate from the slurry. A second set of samples were prepared in the same manner, but with application of the bismuth oxide slurry at a controlled thickness of 0.015 inch (0.38 mm).

In addition to the bismuth oxide samples, control samples were prepared. Preparation of the control samples included cutting 5 cm x 5 cm swatches from an ESP^{™} radiation shielding examination glove available from Boston Scientific of Natick, Massachusetts. That radiation shielding glove includes lead particles dispersed throughout an elastomer at a solids content of approximately 60%, by weight.

Once sample and control swatch preparation was complete, three tests were performed. In each test, a dosimeter was placed beneath each sample and control swatch, and exposed to ionizing radiation from a Philips C-Arm mobile x-ray device. In a first test, the samples and control swatches were exposed to x-ray radiation at an intensity of 60 kVp for 60 seconds. In a second test, the samples and control swatches were exposed to x-ray radiation at an intensity of 95 kVp for 60 seconds. In a third test, the samples and control swatches were exposed to x-ray radiation at an intensity of 110 kVp for 60 seconds.

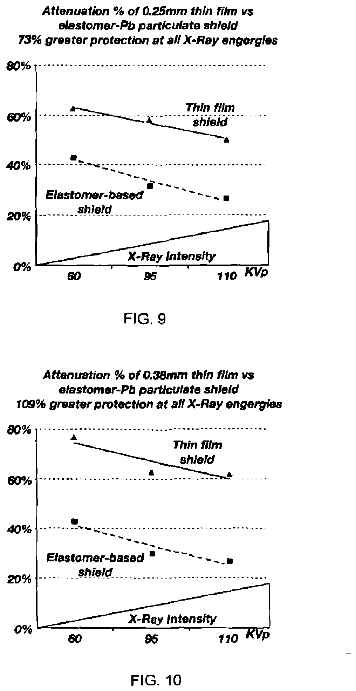

FIGs. 9 and 10 illustrate the attenuation provided by each radio-opaque film sample and control swatch, as determined by the amount of radiation to which the dosimeters were exposed, in terms of the percentage of radiation attenuated at each intensity. FIG. 9 compares the x-ray attenuation ability of a radio-opaque film with a 0.25 mm bismuth oxide layer to the ability of a commercially available elastomer-lead radio-opaque film to attenuate x-rays. FIG. 10 compares the x-ray blocking ability of a radio-opaque film with a 0.38 mm thick bismuth oxide layer to the ability of a commercially available elastomer-lead radio-opaque film to attenuate x-rays.

The data provided by both FIG. 9 and FIG. 10 indicate that the bismuth oxide sample films attenuate significantly more x-ray radiation than the lead-based control swatches. As FIG. 9 demonstrates, the sample with the 0.25 mm thick bismuth oxide film attenuates x-rays at a rate of about 73% more than the commercially available lead-based film. FIG. 10 shows that the 0.38 mm thick bismuth oxide film attenuates nearly twice as much x-ray radiation as the lead-based compound of the control swatch.

### EXAMPLE 2

In a second study, the ability of a radio-opaque film 10 (FIG. 4) to attenuate x-ray radiation was compared with the attenuation abilities of three other materials, including a lead foil, which served as a reference; a radio-opaque layer from a lead shield, which was rated as having a 0.5 mm lead equivalent attenuation; and a radio-opaque layer from a lead-free shield, which was also rated as having a 0.5 mm lead equivalent attenuation. These products were exposed to the same energies of x-rays for identical amounts of time.

Two radio-opaque films 10 were evaluated: a first having a single radio-opaque layer ( a 0.75 mm thick bismuth oxide layer); and a second, which included a 0.7 mm thick bi-layer made of two radio-opaque materials: a 0.35 mm thick bismuth oxide layer (80% w/w bismuth oxide, 20% w/w binder (*see* EXAMPLE 1); and a 0.35 mm thick bismuth-bismuth oxide layer (80% w/w bismuth-bismuth oxide, including 50% w/w bismuth and 50% w/w bismuth oxide, with the balance comprising the binder (*see* EXAMPLE 1). Both radio-opaque films included two sheets (about 0.1 mm thick) of TYVEK^{®} flashspun polyethylene fibers with a radio-opaque layer therebetween.

The lead foil used in the study was 99.9% pure foil available from Alfa Aesar. The lead shield, which had a thickness of 1.5 mm, was a 0.5 mm lead-equivalent STARLITE radiation shield (Lot# 10166) available from Bar Ray Products of Littlestown, Pennsylvania. The lead-free shield, which had a 0.5 mm lead-equivalent thickness of 1.9 mm, was a TRUE LITE radiation shield (Lot# 10467) available from Bar Ray Products. The lead-free shield, which had a thickness of 1.9mm, was made from elemental antimony (Sb), in the form of particles embedded in an elastomeric material at a weight ratio of about 1:1.

NANODOT^{®} dosimeters, available from Landauer, Inc., of Glendale, Illinois, were used to detect the amount of x-ray radiation that passed through each of the tested products.

Two sets of tests were performed. In a first set of tests, the x-ray attenuating ability of the single layer 0.75 mm specimen was evaluated. In a second set of tests, the ability of the two-layer 0.7 mm specimen to attenuate x-ray radiation was evaluated.

In each set of tests, attenuation was evaluated at x-ray energies of 60 kVp, 90 kVp and 120 kVp. Each of the tests was repeated five times, with previously unused dosimeters used in each individual test.

In the first set of tests, five dosimeters were placed on a surface within an anticipated field of exposure having a diameter of about 250 mm. A Tyvek test specimen and a sample of each of three comparative products (*i.e*., the lead film, the lead shield and the lead-free shield) were placed over four of the dosimeters. Another dosimeter was not covered. A National Institute of Standards and Technology (NIST)- and ISO-calibrated x-ray source available at Landauer's laboratory was used to simultaneously expose each product to x-ray radiation. One of the predetermined x-ray energies was then generated, with the tested product and the comparative products, as well as the bare dosimeter, within the field of exposure. An ion chamber was used to measure the radiation dosage at the beginning of each of the tests (*i.e.,* different energies). Ion chamber counts were obtained three times to verify reproducibility of the measurements. In each test (*i.e.,* for each energy of x-ray radiation), exposure to the x-ray radiation lasted for 60 seconds.

Following each test, the dosimeters were removed and stored carefully to maintain traceability. Data was then obtained from the dosimeters to determine the measured incident dosages of x-ray radiation (the control provided by the bare dosimeters) and the transmitted dosages of x-ray radiation (the amounts of x-ray radiation attenuated by each product, as measured by the covered dosimeters).

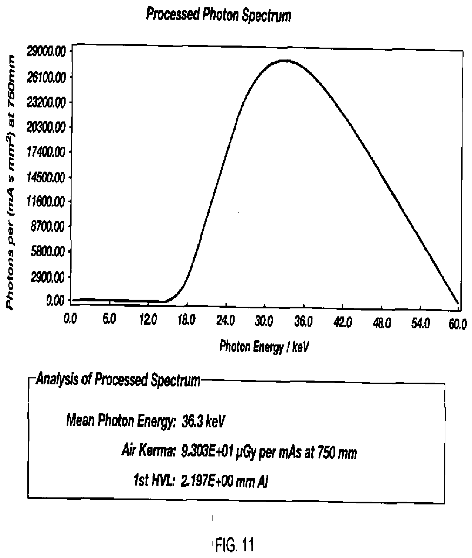

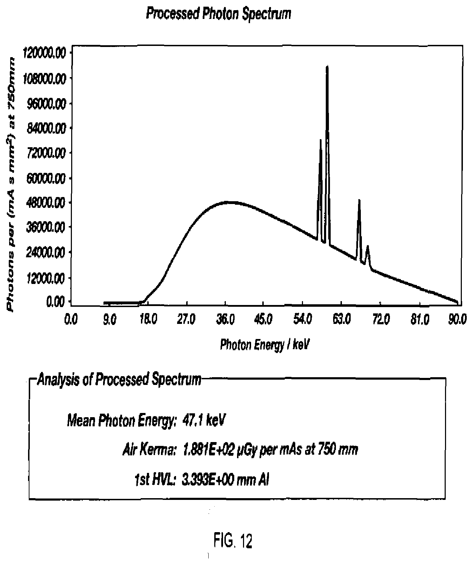

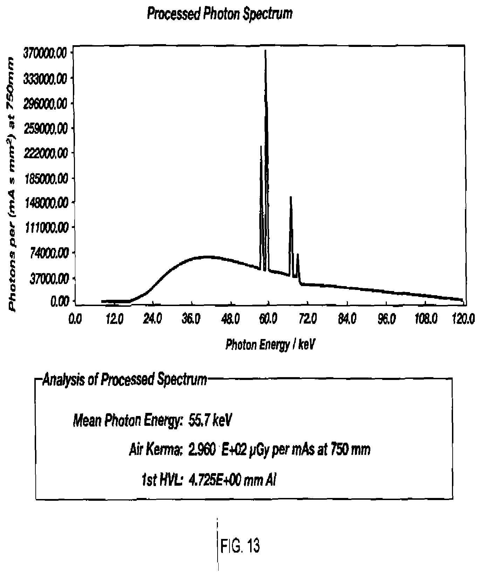

FIGs. 11-13 show the x-ray energy spectra at 60 kVp, 90 kVp and 120 kVp, respectively. In TABLE 1, data corresponding to the dosage of x-ray radiation, measured in mrad, to which each dosimeter (*i.e.,* the bare dosimeter, the dosimeter under the 0.75 mm test product ("Drape"), the dosimeters under the three comparative products "Lead Foil," "Lead Free," "Lead Shield") was exposed is set forth. Each value comprises an average of the five replicate tests at each energy (kVp) of x-ray radiation.

**TABLE 1**

| KVp | Shielding | Read Ave mrad | StdDev of Read mrad | Energy Adjusted Dose (mrem) | StdDev of Energy Adjusted Dose |
|---|---|---|---|---|---|
| 60 | Bare | 253 | 7 | 243 | 7 |
| | Tyvek Drape | 28 | 2 | 27 | 1 |
| | Lead Foil | 9 | 1 | 8 | 1 |
| | Lead Free | 17 | 1 | 16 | 1 |
| | Lead Shield | 11 | 1 | 10 | 1 |
| 90 | Bare | 533 | 10 | 537 | 10 |
| | Drape | 100 | 4 | 101 | 4 |
| | Lead | 30 | 1 | 30 | 1 |
| | Lead Foil | 19 | 1 | 19 | 1 |
| | Lead Free | 57 | 1 | 58 | 1 |
| 120 | Bare | 850 | 8 | 824 | 8 |
| | Drape | 203 | 5 | 197 | 5 |
| | Lead Foil | 31 | 1 | 30 | 1 |
| | Lead Free | 129 | 3 | 125 | 3 |
| | Lead Shield | 61 | 2 | 59 | 2 |

From these data, the amount of attenuation by each product was calculated using attenuation by the 0.5mm lead foil ("Lead Foil") as a baseline. Specifically, the transmitted mrad values for the other products were divided by the transmitted mrad values for the 0.5 mm lead foil. The percent (%) attenuation was then calculated as the complement of the quotient.

The 0.5 mm lead foil attenuates x-ray radiation better than the other products. In decreasing order of x-ray attenuation ability were the 1.5 mm lead shield (98%), the 1.9 mm lead-free shield (92%) and the much thinner 0.75 mm Tyvek test specimen (about 85%). Of course, by increasing the thickness of the radio-opaque layer of the test product, its ability to attenuate x-ray radiation would also increase, approaching that of the lead foil.

In the second set of tests, the ability of two-layer, 0.7 mm test product ("2L BB" in TABLE 2 below) to attenuate three different energies of x-ray radiation was evaluated. In each of the tests, a dosimeter was placed beneath the test product, while another dosimeter was directly exposed to the x-ray radiation. At each energy, five sets of data were obtained. TABLE 2 tabulates the average dosage, in mrad, at each of the three x-ray radiation energies (kVp).

**TABLE 2**

| kVp | Shielding | Read Average mrad | Standard Deviation of Delivered mrad | Energy Adjusted Dose (mrem) | Std Deviation of mrem |
|---|---|---|---|---|---|
| 60 | 2L BB | 13 | 0.68 | 12 | 0.73 |
| | Bare | 254 | 10.5 | 244 | 10.09 |
| 90 | 2L BB | 49 | 1.95 | 50 | 1.97 |
| | Bare | 542 | 13.91 | 546 | 14.02 |
| 120 | 2L BB | 114 | 5.31 | 111 | 5.15 |
| | Bare | 836 | 14.73 | 811 | 14.29 |

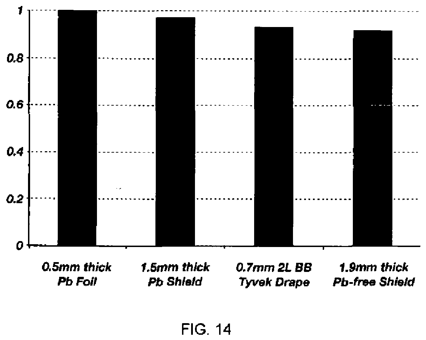

FIG. 14 illustrates the ability of the 0.7 mm radio-opaque layer of the present invention to attenuate ionizing radiation relative to the 0.5 mm thick lead foil, the 1.5 mm thick lead-based radio-opaque layer, and the 1.9 mm thick lead-free radio-opaque layer. Based on the promise provided by the data illustrated by FIG. 14, the estimated weight of a frontal radiation shield (based on the 5,000 cm² area of radio-opaque material used in some commercially available frontal radiation shields) made from a 0.7 mm radio-opaque film of the present invention was calculated, and compared with the known weight of lead frontal radiation shield of the same size.

In FIG. 15, the weight savings that would be provided by a frontal radiation shield made from a 0.7 mm radio-opaque film of the present invention is depicted in terms of a percent weight savings, as is the amount of weight savings of a lead-free frontal radiation shield over a lead frontal radiation shield. FIG. 16 shows that a complete gown (about 10,000 cm² total area) made from the 0.7 mm radio-opaque film would still weight significantly less (about 35% less) than the combined weights of a lead frontal radiation shield and sterile gown made from sheets of TYVEK^{®} flashspun polyethylene fibers. In contrast, a gown fashioned from the 1.9 mm lead-free radio-opaque material would weight significantly more (about 20% more) than the combined weights of a lead frontal radiation shield and sterile gown.

From the foregoing, it is apparent that a radio-opaque film that incorporates teachings of the present invention may provide comparable radiation attenuation to existing radio-opaque materials at a significantly reduced thickness and weight.

FIG. 17 is a flow diagram 400 illustrating a method for providing radiation attenuation. The method of the flow diagram 400 is capable of being implemented in any medical setting in which fluoroscopic imaging systems and other medical diagnostics and treatment systems used for diagnostic detection, treatment, or guiding purposes when performing medical procedures. In particular, the method of flow diagram 400 is capable of providing radiation protection to arms and hands of medical staff.

At 410, a specimen is imaged using a fluoroscopic radiation system. The fluoroscopic radiation system emits x-ray radiation over a radiation field. The specimen is located within the radiation field, and may be viewed using a fluoroscopic viewing screen.

At 420, a body part is exposed to the radiation. The body part is not targeted for imaging, and is at risk of radiation exposure. The body part may belong to the patient, or it may belong to a member of the medical staff performing the medical procedure on the patient. For instance, the body part may be a hand or arm of the physician performing the medical procedure.

At 430, human tissue (e.g., skin) of the non-targeted body part is covered with a radiation shield that is capable of attenuating the radiation. The radiation shield 340 includes an active ingredient that may be homogeneously dispersed throughout a carrier. More particularly, the active ingredient may comprise an inorganic salt compound having a high atomic number (e.g., an atomic number of 50 or greater, an atomic number of 52 or greater, an atomic number of 59 or greater, etc.), and is suitable for attenuating radiation. The radiation shield that may be topically applied to the human tissue, maymay comprise a carrier having thixotropic properties. For instance, the carrier is a cream based organic composition that is formulated for ready and effective application on the skin. Alternatively, the carrier is in a form that is capable of being sprayed or in a form that can be wrapped around the skin. According to the invention, the radiation shield comprises part of a radio-opaque film as defined in the appended set of claims, such as a drape or garment, positioned over a body part that is to be shielded from radiation.

For purposes of clarification, it is understood that the radiation shield is applied beneficially to protect against over-exposure to radiation, and that in one implementation the radiation shield is applied before there is any risk of radiation exposure, and in another implementation the radiation shield is applied while being exposed to radiation.

In another embodiment, a protective covering is placed over the human tissue. For instance, the protective covering may cover skin of fingers of a hand of a member of the medical staff. During some medical procedures, a double layer of protective covering is placed over the human tissue. For instance, the hand may be double-gloved to provide additional protection to the hand.

The present invention concerns a radio-opaque film according to the appended set of claims, comprising a first polymer layer, a second polymer layer; and a radio-opaque layer between the first and second polymer layers, the radio-opaque layer comprising two or more sublayers, each sublayer comprising a composition for attenuating ionizing radiation, comprising a carrier and an active ingredient homogeneously dispersed throughout the carrier and including a non-toxic substance suitable for attenuating ionizing radiation, the radio-opaque layer comprising at least about 50%, by weight, of the radio-opaque material. The non-toxic substance comprises at least one atomic species having an atomic number of at least 50. Preferably the active ingredient comprises at least one of bismuth species, barium species and lanthanum species. In another embodiment, the active ingredient comprises at least one of an inorganic salt of the at least one atomic species and an oxidized form of the at least one oxidized species.

Other embodiments concern a radio-opaque film, wherein the carrier of the radio-opaque layer comprises a binder for holding adjacent particles of the active ingredient together. In some embodiments the binder comprises at most about 50% of the weight of the composition. In some embodiments the binder of radio-opaque film comprises a polymer.

In other embodiments, the radio-opaque film the density of the composition is less than about 11 grams per cm3. In yet other embodiments, the radio-opaque layer of the radio-opaque film has a thickness of about 0.5 mm or less, a thickness of about 0.38 mm or less, or a thickness of about 0.25 mm or less.

In a further embodiment the radio-opaque film further comprises a substrate adjacent to the first polymer layer. In another embodiment the substrate comprises paper or a paper-like material.

In yet a further embodiment, the radio-opaque film further comprises a radio-transparent window through at least the radio-opaque layer. In some embodiments, the radio-transparent window comprises an opening extending through the first polymer layer, the radio-opaque layer, and the second polymer layer.

The radio-opaque films concern films wherein the radio-opaque layer includes a plurality of sublayers. At least one sublayer of the plurality of sublayers of the radio-opaque layer comprises a different radio-opaque material than an adjacent sublayer of the plurality of sublayers of the radio-opaque layer. In other embodiments, the at least one sublayer is configured to be positioned closer to a source of ionizing radiation than the adjacent sublayer; and the radio-opaque material of the at least one sublayer is based upon an element having a lower atomic number than an atomic number of another element upon which the different radio-opaque material of the adjacent sublayer is based. Further embodiments concern a radio-opaque film wherein at least one sublayer of the plurality of sublayers of the radio-opaque layer attenuates ionizing radiation differently than an adjacent sublayer of the plurality of sublayers of the radio-opaque layer. The at least one sublayer of the radio-opaque film comprises a first radio-opaque material based on a first element having an atomic number that exceeds an atomic number of a second element upon which a second radio-opaque material of the adjacent sublayer is based. Other embodiments concern a radio-opaque film wherein the at least one sublayer of the radio-opaque film is located closer to the second polymer layer than the adjacent sublayer, said radio-opaque film further comprising a substrate adjacent to the first polymer layer, the substrate configured to face the source of radiation. Other embodiments concerns a radio-opaque film further comprising a barrier between adjacent sublayers of the plurality of sublayers.

Embodiments of a method to manufacture a radio-opaque film according to the invention are also encompassed. In one embodiment, a method for manufacturing a radio-opaque film according to the invention, comprises depositing the radio-opaque material onto a surface of the first polymer layer; disposing the second polymer layer of the radio-opaque material; and securing the second polymer layer to the first polymer layer to secure the radio-opaque material between the first and second polymer layers. In further embodiments, the method further comprises depositing another radio-opaque material over the radio-opaque material on the surface of the first polymer layer. In yet a further embodiment, the method further comprises applying a barrier to the radio-opaque material before depositing the another radio-opaque material.

In another embodiment, depositing the radio-opaque material in a method to manufacture a radio-opaque film comprises printing the radio-opaque material onto the surface of the first polymer layer.

Another embodiment concerns a method for manufacturing a radio-opaque film, wherein securing comprises adhesively securing the first and second polymer layers to one another.

Another embodiment concerns a method to manufacture a radio-opaque film, wherein securing comprises thermally bonding the first and second polymer layers to one another.

Another embodiment concerns a method to manufacture a radio-opaque film, wherein thermally bonding includes thermally bonding material between the first and second polymer layers to the first and second polymer layers.

Yet another embodiment concerns an imaging system, comprising: a radiation source for emitting radiation over a radiation field; a targeted specimen located within the radiation field; a non-targeted body part located within the radiation field, wherein the body part is at risk of overexposure to the radiation while the targeted specimen is being imaged; and a radiation shield over the non-targeted body part, the radiation shield comprising at least one of the compositions for attenuating ionizing radiation according to the invention and the radio-opaque film according to the invention and being configured to attenuate the ionizing radiation.

An even further embodiment concerns an imaging method, comprising: covering at least a portion of a body part at risk of overexposure to ionizing radiation with a radiation shield comprising at least one of the compositions for attenuating ionizing radiation according to the invention and the radio-opaque film according to the invention; emitting ionizing radiation over a radiation field; imaging a specimen within the radiation field; and attenuating ionizing radiation with the radiation shield.

## Claims

1. A radio-opaque film, comprising a radio-opaque layer disposed between a first containment layer and a second containment layer, the radio-opaque layer comprising:
- a first sublayer comprising a first radio-opaque material comprising barium sulfate; and
- a second sublayer comprising a second radio-opaque material comprising bismuth oxide;
wherein the first sublayer is disposed adjacent the second sublayer and the radio-opaque material of the first sublayer differs from the radio-opaque material of the second sublayer, and wherein all the radio-opaque materials in the radio-opaque layer are inorganic salts or oxides of elemental species having an atomic number of 50 or greater.

2. The radio-opaque film of claim 1, wherein all the radio-opaque materials in the radio-opaque layer are inorganic salts or oxides of elemental species having an atomic number of 56 or greater.

3. The radio-opaque film of claim 1, wherein the first sublayer and the second sublayer are configured to attenuate ionizing radiation differently.

4. The radio-opaque film of claim 1, wherein the first sublayer and the second sublayer are configured to attenuate ionizing radiation over a different range of frequencies.

5. The radio-opaque film of claim 1, wherein the first sublayer and the second sublayer are configured to attenuate ionizing radiation over a different range of wavelengths.

6. The radio-opaque film of claim 1, wherein each of the first sublayer and the second sublayer comprises a binder.

7. The radio-opaque film of claim 6, wherein the binder comprises at least one of the following: polyvinyl alcohol, polyvinyl butyrol, polyethylene glycol, glycerine, capric triglyceride, cetyl alcohol, or glyceryl sterate.

8. The radio-opaque film of claim 6, wherein the first sublayer comprises 50% or more by weight of the first radio-opaque material, and wherein the second sublayer comprises 50% or more by weight of the second radio-opaque material.

9. The radio-opaque film of claim 6, wherein the first sublayer comprises 75% or more by weight of the first radio-opaque material, and wherein the second sublayer comprises 75% or more by weight of the second radio-opaque material.

10. Use of the radio-opaque film of claim 1 to attenuate ionizing radiation and to provide radiation protection during a medical procedure.

## Patentansprüche

1. Röntgenstrahlenundurchlässiger Film, aufweisend eine röntgenstrahlenundurchlässige Schicht, die zwischen einer ersten Einhausungsschicht und einer zweiten Einhausungsschicht angeordnet ist, wobei die röntgenstrahlenundurchlässige Schicht aufweist:
- eine erste Subschicht, die ein erstes röntgenstrahlenundurchlässiges Material aufweist, das Bariumsulfat aufweist, und
- eine zweite Subschicht, die ein zweites röntgenstrahlenundurchlässiges Material aufweist, das Bismutoxid aufweist,
wobei die erste Subschicht benachbart zu der zweiten Subschicht angeordnet ist und das röntgenstrahlenundurchlässige Material der ersten Subschicht verschieden ist von dem röntgenstrahlenundurchlässigen Material der zweiten Subschicht, und wobei alle röntgenstrahlenundurchlässigen Materialen in der röntgenstrahlenundurchlässigen Schicht anorganische Salze oder Oxide von elementaren Spezies sind, die eine Ordnungszahl von 50 oder mehr haben.

2. Röntgenstrahlenundurchlässiger Film gemäß Anspruch 1, wobei alle röntgenstrahlenundurchlässigen Materialien in der röntgenstrahlenundurchlässigen Schicht anorganische Salze oder Oxide von elementaren Spezies sind, die eine Ordnungszahl von 56 oder größer haben.

3. Röntgenstrahlenundurchlässiger Film gemäß Anspruch 1, wobei die erste Subschicht und die zweite Subschicht konfiguriert sind, um ionisierende Strahlung unterschiedlich abzuschwächen.

4. Röntgenstrahlenundurchlässiger Film gemäß Anspruch 1, wobei die erste Subschicht und die zweite Subschicht konfiguriert sind, um ionisierende Strahlung über einen unterschiedlichen Bereich von Frequenzen abzuschwächen.

5. Röntgenstrahlenundurchlässiger Film gemäß Anspruch 1, wobei die erste Subschicht und die zweite Subschicht konfiguriert sind, um ionisierende Strahlung über einen unterschiedlichen Bereich von Wellenlängen abzuschwächen.

6. Röntgenstrahlenundurchlässiger Film gemäß Anspruch 1, wobei jede von der ersten Subschicht und der zweiten Subschicht einen Binder aufweist.

7. Röntgenstrahlenundurchlässiger Film gemäß Anspruch 6, wobei der Binder wenigstens eines von dem folgenden aufweist: Polyvinylalkohol, Polyvinylbutyrol, Polyethylenglykol, Glycerin, Caprintriglyzerid, Cetylalkohol oder Glycerylstearin.

8. Röntgenstrahlenundurchlässiger Film gemäß Anspruch 6, wobei die erste Subschicht 50 Gew.-% oder mehr von dem ersten röntgenstrahlenundurchlässigen Material aufweist, und wobei die zweite Subschicht 50 Gew.-% oder mehr von dem zweiten röntgenstrahlenundurchlässigen Material aufweist.

9. Röntgenstrahlenundurchlässiger Film gemäß Anspruch 6, wobei erste Subschicht 75 Gew.-% oder mehr von dem ersten röntgenstrahlenundurchlässigen Material aufweist, und wobei die zweite Subschicht 75 Gew.-% oder mehr von dem zweiten röntgenstrahlenundurchlässigen Material aufweist.

10. Verwendung des röntgenstrahlenundurchlässigen Films gemäß Anspruch 1, um ionisierende Strahlung abzuschwächen und um Strahlungsschutz bereitzustellen während einer medizinischen Prozedur.

## Revendications

1. Film radio-opaque, comprenant une couche radio-opaque disposée entre une première couche de confinement et une deuxième couche de confinement, la couche radio-opaque comprenant :
- une première sous-couche comprenant un premier matériau radio-opaque comprenant du sulfate de baryum ; et
- une deuxième sous-couche comprenant un deuxième matériau radio-opaque comprenant de l'oxyde de bismuth ;
dans lequel la première sous-couche est disposée adjacente à la deuxième sous-couche et le matériau radio-opaque de la première sous-couche diffère du matériau radio-opaque de la deuxième sous-couche, et dans lequel tous les matériaux radio-opaques dans la couche radio-opaque sont des sels inorganiques ou des oxydes d'espèces élémentaires ayant un numéro atomique de 50 ou plus.

2. Film radio-opaque selon la revendication 1, dans lequel tous les matériaux radio-opaques dans la couche radio-opaque sont des sels inorganiques ou des oxydes d'espèces élémentaires ayant un numéro atomique de 56 ou plus.

3. Film radio-opaque selon la revendication 1, dans lequel la première sous-couche et la deuxième sous-couche sont configurées pour atténuer différemment un rayonnement ionisant.

4. Film radio-opaque selon la revendication 1, dans lequel la première sous-couche et la deuxième sous-couche sont configurées pour atténuer un rayonnement ionisant sur une plage de fréquences différente.

5. Film radio-opaque selon la revendication 1, dans lequel la première sous-couche et la deuxième sous-couche sont configurées pour atténuer un rayonnement ionisant sur une plage de longueurs d'onde différente.

6. Film radio-opaque selon la revendication 1, dans lequel chacune de la première sous-couche et de la deuxième sous-couche comprend un liant.

7. Film radio-opaque selon la revendication 6, dans lequel le liant comprend au moins l'un des éléments suivants : alcool polyvinylique, butyrol polyvinylique, polyéthylène glycol, glycérine, triglycéride caprique, alcool cétylique ou stéarate de glycéryle.

8. Film radio-opaque selon la revendication 6, dans lequel la première sous-couche comprend 50 % ou plus en poids du premier matériau radio-opaque, et dans lequel la deuxième sous-couche comprend 50 % ou plus en poids du deuxième matériau radio-opaque.

9. Film radio-opaque selon la revendication 6, dans lequel la première sous-couche comprend 75 % ou plus en poids du premier matériau radio-opaque, et dans lequel la deuxième sous-couche comprend 75 % ou plus en poids du deuxième matériau radio-opaque.

10. Utilisation du film radio-opaque selon la revendication 1 pour atténuer un rayonnement ionisant et pour fournir une protection contre le rayonnement pendant un acte médical.
